# EUROPÄISCHE PATENTANMELDUNG

(11) **EP 3 735 821 A1**
(43) Veröffentlichungstag der Anmeldung: **11.11.2020**
(21) Anmeldenummer: 20169846.1
(22) Anmeldetag: 16.04.2020
(51) Int. Cl.: A01G 3/02, B26B 29/04

(54) **SCHERE FÜR DEN GARTENBAU**

(30) Priorität: 07.05.2019 AT 504102019
(71) Anmelder: Pammer, Franz, 4070 Eferding (AT)
(72) Erfinder: Pammer, Franz, 4070 Eferding (AT); Popovic, Mario, 51564 Cunski (HR)
(74) Vertreter: Hübscher & Partner Patentanwälte GmbH

(57) **Zusammenfassung**

Es wird eine Schere für den Gartenbau mit zwei um eine Anlenkachse (1) drehbar miteinander verbundenen, gekreuzten Armen (2), die je einen Griffteil (3) und einen dem Griffteil (3) bezüglich der Anlenkachse (1) gegenüberliegenden Schneidteil (4) aufweisen, wobei an jedem Arm (2) griffteilseitig ein von diesem beabstandet in Richtung des Schneidteiles (4) verlaufender Klemmbügel (5) befestigt ist und die einander kreuzenden Klemmbügel (5) im Bereich der Schneidteile (4) eine Klemmaufnahme (10) für das abgetrennte Schnittgut bilden, beschrieben. Um eine Schere der eingangs beschriebenen Art so auszugestalten, dass das Schnittgut in einem Arbeitsschritt abgetrennt, gesammelt und kontrolliert abgelegt werden kann, wird vorgeschlagen, dass die Klemmbügel (5) unter Ausbildung einer konvexen Klemmaufnahme (10) zueinander gekrümmt sind.

## Beschreibung

Die Erfindung bezieht sich auf eine Schere für den Gartenbau mit zwei um eine Anlenkachse drehbar miteinander verbundenen, gekreuzten Armen , die je einen Griffteil und einen dem Griffteil bezüglich der Anlenkachse gegenüberliegenden Schneidteil aufweisen, wobei an jedem Arm griffteilseitig ein von diesem beabstandet in Richtung des Schneidteiles verlaufender Klemmbügel befestigt ist und die einander kreuzenden Klemmbügel im Bereich der Schneidteile eine Klemmaufnahme für das abgetrennte Schnittgut bilden.

Aus dem Stand der Technik sind Scheren für diverse Anwendungsgebiete in mannigfaltigen Ausführungen bekannt, wie beispielsweise Gartenscheren (DE202019100951U1). In vielen Anwendungsgebieten, bei denen eine Schere eingesetzt wird, ist es für den Benutzer jedoch schwierig, die Position des frisch geschnittenen Schnittgutes zu kontrollieren, da sich üblicherweise eine der folgenden Konstellationen ergibt: Der Anwender benötigt beide Hände zum Bedienen der Schere, beispielsweise beim Schnitt widerstandsfähiger Materialien im Gartenbau. Oder aber der Anwender benötigt eine Hand zum Bedienen der Schere und fixiert mit der anderen Hand den zu schneidenden Gegenstand, wobei er nur begrenzt kontrollieren kann, was mit dem Schnittgut passiert. In vielen Fällen ist das Schnittgut zu zahlreich und/oder zu fein, um eine effektive händische Kontrolle zu ermöglichen, wie beispielsweise beim Schneiden von Gräsern. Insbesondere in Fällen, bei denen das Schnittgut aus vielen, durch das Schneiden vereinzelten Komponenten besteht, die schwer zu umgreifen sind, ergibt sich durch die Beseitigung des am Boden verteilten Schnittguts erheblicher zusätzlicher Reinigungsaufwand, der oft den Arbeitsaufwand des eigentlichen Schneidens übersteigt. In der GB356486A wurde daher bereits vorgeschlagen, eine Gartenschere mit einem zusätzlichen, auf einem Schneidteil angebrachten Kamm auszustatten, der ein Verrutschen des Schnittgutes entlang der Klinge während dem Schneidprozess verhindert.

Die US4464837A weist zur Lösung dieses Problems Klemmbügel auf, die im Wesentlichen parallel zur Schneidkante verlaufen. Nachteilig daran ist jedoch, dass je nach Beschaffenheit und Dichte des Schnittgutes die Klemmbügel der Schere im Bereich der Anlenkachse verklemmen, was ein Schließen der Schere und damit weiteres Schneiden verunmöglicht. Zusätzlich kann die Schneidbewegung bei der gezeigten Anordnung der Klemmbügel nicht abgeschlossen werden, falls größere Mengen Schnittgut festgeklemmt sind. Dies senkt die Effizienz des Schneidprozesses und kann, je nach Beschaffenheit des Schnittgutes, dazu führen, dass das Schnittgut im Bereich der Scherenspitze herunterfällt.

Der Erfindung liegt somit die Aufgabe zugrunde, eine Schere der eingangs geschilderten Art so auszugestalten, dass das Schnittgut in einem Arbeitsschritt abgetrennt, gesammelt und kontrolliert abgelegt werden kann.

Die Erfindung löst die gestellte Aufgabe dadurch, dass die Klemmbügel unter Ausbildung einer konvexen Klemmaufnahme zueinander gekrümmt sind . Die erfindungsgemäße Schere weist dadurch eine Schneidebene, die von den beiden Schneidteilen und bei entsprechender Konstruktion auch von den Griffteilen der Schere aufgespannt wird und in der das Schnittgut geschnitten wird, auf. Die Klemmbügel spannen auf der anderen Seite im Bereich der Schneidteile eine Klemmebene auf, die von der Schneidebene so beabstandet ist, dass die Endabschnitte des abgetrennten Schnittgutes sicher zwischen den Klemmbügeln gehalten werden können. Im Gegensatz zur Schneidebene jedoch, bei der eine geringe Beabstandung zwischen den Schneidteilen zum Scherenschnitt erforderlich ist, können die beiden Klemmbügel bezogen auf die Arme, je nach Einsatzgebiet, unterschiedlich beabstandet sein. Die Klemmbügel sind so angeordnet, dass sie in Richtung des Schneidteils des Armes verlaufen, an dem sie befestigt sind, damit beide Klemmbügel durch diese Anordnung das Schnittgut nach dem Schneidevorgang, bei geschlossenen Scherenarmen, festklemmen. Durch die kreuzende Anordnung der Klemmbügel im Bereich der Schneidteile wird eine zumindest halboffene Klemmaufnahme ausgeformt, die ein Verrutschen des Schnittgutes in Richtung der Griffteile verhindert.

Um eine bessere mechanische Fixierung des Schnittgutes zu ermöglichen, wird vorgeschlagen, dass die Klemmbügel unter Ausbildung einer konvexen Klemmaufnahme zueinander gekrümmt sind. Da bei geradliniger Ausführung der Klemmbügel beim Schneiden in Bereichen nahe der Anlenkachse der Schere die Klemmkraft aufgrund des Hebelgesetzes ungleich höher ist als im Bereich der Scherenspitze, kann der Schneidvorgang zum Verbiegen oder Brechen des Schnittgutes führen, oder, je nach Anordnung der Klemmbügel, die Schere verklemmen. Bei konvexer Ausführung der gekreuzten Bügel ergeben sich jedoch, neben der Vermeidung dieser Probleme, andere positive Effekte: Durch die Krümmung kann sich die Klemmaufnahme zwischen den Klemmbügeln im Bereich der der Anlenkachse abgewandten, die Scherenspitze ausbildenden Endabschnitte der Schneidteile beim Schließen der Schere stärker verengen als im restlichen Bereich der Schneidteile, sodass ein etwaiges Herausfallen des abgetrennten Schnittgutes im Bereich der Scherenspitze verhindert wird. Durch die gekreuzte Anordnung der Klemmbügel bewegt sich während der Schneidbewegung der Kreuzungspunkt der Klemmbügel Richtung Scherenspitze, der dabei ausgeübte Druck auf das Schnittgut ist jedoch durch die konvexe Krümmung geringer als bei geradliniger Ausführung, was bei geeigneter Einstellung der Krümmung zu einem Vorwärtsschub des Schnittgutes, begrenzt durch die vordere Verengung, und dadurch zu einer Bündelung des Schnittgutes führt. Diese Bündelung erweist sich vor allem in Bezug auf die kontrollierte Ablage des Schnittgutes als vorteilhaft.

Auch wenn im einfachsten Fall die Klemmbügel stoffschlüssig auf dem jeweiligen Arm angebracht werden, können, um bestehende Scheren für den Gartenbau einfach und reversibel mit den beschriebenen Klemmbügeln nachzurüsten und für den jeweiligen Einsatz zu optimieren, an den Armen griffteilseitig lösbare Halteklammern befestigt sein, an denen die Klemmbügel um je eine zur Anlenkachse parallele Achse drehverstellbar gelagert sind. Durch diesen Mechanismus kann die Gartenschere, je nach Einsatzgebiet, einerseits herkömmlich und andererseits mit den Klemmbügeln verwendet werden. Aufgrund der drehverstellbaren Lagerung der Klemmbügel kann zudem je nach Anwendungsgebiet und Schnittgut die Klemmaufnahme in ihrer Größe angepasst, und der Anpressdruck der Bügel auf das Schnittgut eingestellt werden. In einer bevorzugten Ausführung der Erfindung werden hierbei die Klemmbügel L-förmig ausgeformt, wobei die langen Schenkel beider Klemmbügel gemeinsam die Klemmaufnahme bilden und die kurzen Schenkel mit einem Gewinde versehen sind. Nachdem die Ausrichtung der langen Schenkel eingestellt wurde, können die kurzen Schenkel mit einer Schraubenmutter in der jeweiligen Halteklammer parallel zur Anlenkachse arretiert werden.

In der Zeichnung ist der Erfindungsgegenstand beispielsweise dargestellt. Es zeigen
- Fig. 1: eine Draufsicht auf die erfindungsgemäße Schere im geöffneten Zustand,
- Fig. 2: eine Seitenansicht einer solchen Schere und
- Fig. 3: eine der Fig. 1 entsprechende Draufsicht der Schere im geschlossenen Zustand

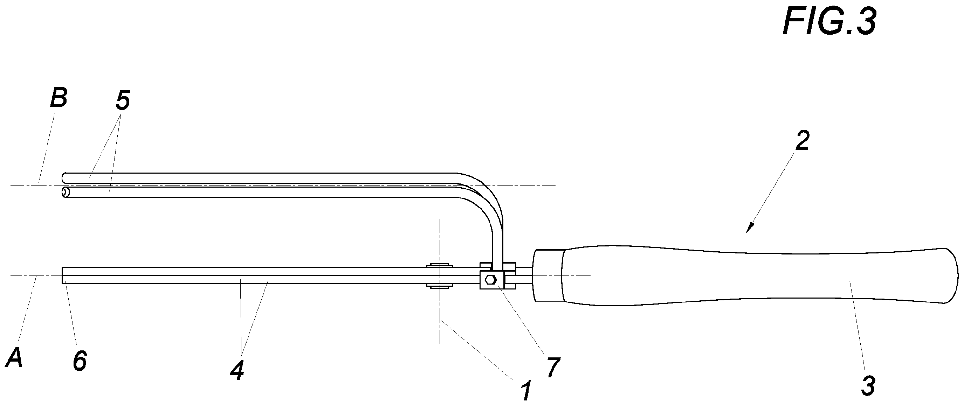

Die erfindungsgemäße Schere weist zwei um eine Anlenkachse 1 drehbar miteinander verbundene, über Kreuz geführte Arme 2 auf, die jeweils einen Griffteil 3 und einem Schneidteil 4 umfassen. Griffteil 3 und Schneidteil 4 eines Armes 2 liegen sich bezüglich der Anlenkachse 1 gegenüber. Die beiden Arme 2 spannen dabei eine Schneidebene A auf, wie dies in der Fig. 3 schematisch angedeutet ist.

An jedem Arm 2 sind bezogen auf die Anlenkachse 1 griffteilseitig Klemmbügel 5 befestigt. Diese Klemmbügel 5 verlaufen entlang der Schneidteile 4 in Richtung der Scherenspitze 6, und zwar in einer zur Schneidebene A parallelen und von dieser beabstandeten Klemmebene B.

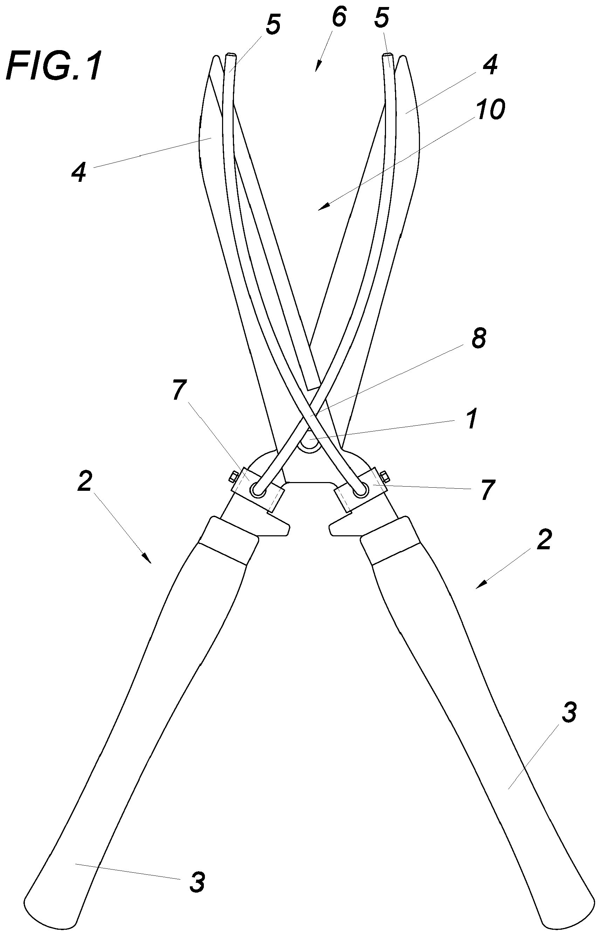

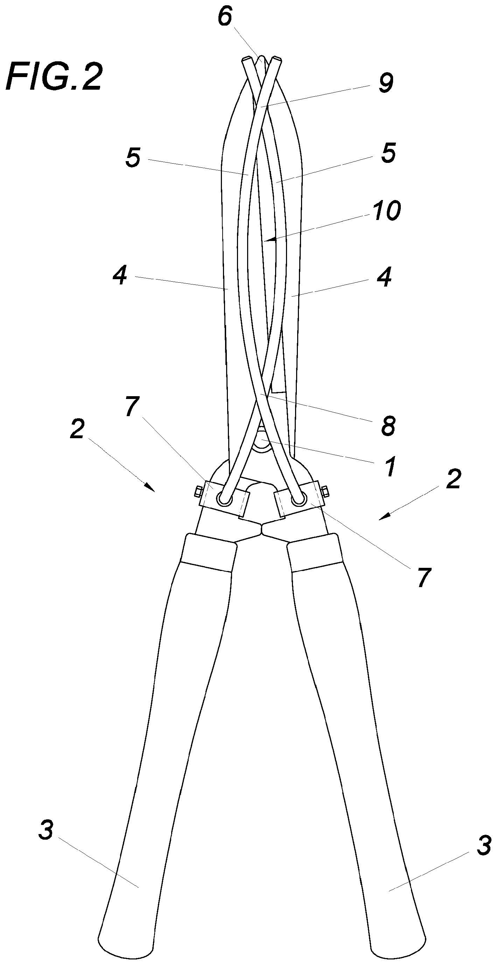

Um ein einfaches Montieren der erfindungsgemäßen Klemmbügel 5 auf unterschiedlichen Scheren zu ermöglichen, können die Klemmbügel 5 über lösbare Halteklammern 7 drehverstellbar an den Armen 2 gelagert werden. Die Ausrichtung der Klemmbügel 5 gegenüber den Armen 2 ist dabei vorzugsweise dergestalt, als dass sich bei geöffneter Schere wie in Fig. 1 dargestellt ein Kreuzungspunkt 8 im Bereich der Anlenkachse 1 ergibt und bei geschlossener Schere wie in Fig. 2 dargestellt sowohl ein Kreuzungspunkt 8 im Bereich der Anlenkachse 1 als auch ein Krezungspunkt 9 im Bereich der Scherenspitze 6.

Damit bilden die einander kreuzenden Klemmbügel 5 im Bereich der Schneidteile 4 eine Klemmaufnahme 10 für das abgetrennte Schnittgut. In einer in den Fig. 1 und 2 dargestellten, bevorzugten Ausführungsform können die Klemmbügel 5 zueinander gekrümmt sein, sodass die Klemmaufnahme 10 konvex ausgebildet ist.

Durch eine drehverstellbare Lagerung der Klemmbügel 5 an den Armen 2 kann die Ausrichtung der Klemmbügel 5 um eine zur Anlenkachse 1 parallelen Achse geändert werden, sodass die Größe der Klemmaufnahme 10 an das zu bearbeitende Schnittgut angepasst werden kann.

Um eine einfache Lagerung in den Halteklammern 7 zu ermöglichen, können die Klemmbügel 5, wie in der Zeichnung dargestellt, L-förmig ausgestaltet sein, wobei die langen Schenkel der Klemmbügel 5 der erfindungsgemäßen Schere beabstandet und parallel zu den Schneidteilen 4 in der Klemmebene B verlaufen. Die kurzen Schenkel der Klemmbügel 5 sind unterschiedlich lang ausgeführt, um eine Überkreuzung der Klemmbügel 5 zu ermöglichen.

Zufolge der erfindungsgemäßen Merkmale befindet sich beim Umfassen des Schnittgutes mit der Schere dieses bereits zwischen den Klemmbügeln 5 im Bereich der Klemmaufnahme 10. Beim Schließen der Schere, also bei einem Verschwenken der beiden Arme 2 aus der in der Fig. 1 dargestellten Offenstellung in die in der Fig. 2 dargestellte Schließstellung wird gleichzeitig mit dem Abtrennen des Schnittgutes über die Schneidteile 4 das Schnittgut durch die sich während des Schließens verjüngende Klemmöffnung 10 fixiert, wodurch nicht nur ein unkontrolliertes Herausfallen des Schnittgutes verhindert, sondern auch ein Entweichen des Schnittgutes in Richtung der Scherenspitze 6 und der Anlenkachse 1 unterbunden wird. Des Weiteren verschiebt sich während dem Schließen der Schere der Kreuzungspunkt 8 in Richtung der Scherenspitze 6, was bei richtiger Ausrichtung und Wahl der Krümmung der Klemmbügel 5 zu einer vorteilhaften Bündelung des Schnittgutes und zu einer den Schneidvorgang verbessernden Relativbewegung des Schnittgutes entlang der Klingen der Schneidteile 4 führt.

## Patentansprüche

1. Schere für den Gartenbau mit zwei um eine Anlenkachse (1) drehbar miteinander verbundenen, gekreuzten Armen (2), die je einen Griffteil (3) und einen dem Griffteil (3) bezüglich der Anlenkachse (1) gegenüberliegenden Schneidteil (4) aufweisen, wobei an jedem Arm (2) griffteilseitig ein von diesem beabstandet in Richtung des Schneidteiles (4) verlaufender Klemmbügel (5) befestigt ist und die einander kreuzenden Klemmbügel (5) im Bereich der Schneidteile (4) eine Klemmaufnahme (10) für das abgetrennte Schnittgut bilden, **dadurch gekennzeichnet, dass** die Klemmbügel (5) unter Ausbildung einer konvexen Klemmaufnahme (10) zueinander gekrümmt sind.

2. Schere nach Anspruch 1 , **dadurch gekennzeichnet, dass** an den Armen (2) griffteilseitig lösbare Halteklammern (7) befestigt sind, an denen die Klemmbügel (5) um je eine zur Anlenkachse (1) parallele Achse drehverstellbar gelagert sind.
